# EUROPEAN PATENT APPLICATION

(11) **EP 4 726 016 A1**
(43) Date of publication of application: **15.04.2026**
(21) Application number: 24205671.1
(22) Date of filing: 09.10.2024
(51) Int. Cl.: C10M 171/00, C10M 169/04, C10N 30/12, C10N 30/20, C10N 40/00, C10N 50/00

(54) **ADDITIVE COMPOSITION FOR LUBRICANTS AND METHOD OF USE THEREOF**

(71) Applicant: Syensqo Specialty Polymers Italy S.p.A., 20021 Bollate (MI) (IT)
(72) Inventor: BEA, Michela, 20021 BOLLATE (IT); GARAVAGLIA, Silvia, 20021 BOLLATE (IT); LO PRESTI, Eliana, 20021 BOLLATE (IT)
(74) Representative: Marturano, Pasqualino

(57) **Abstract**

The present invention relates to an additive composition comprising: (A) at least one (per)fluoropolyether polymer [PFPE polymer_{add}] comprising a (per)fluoropolyether chain [PFPE chain_{add}] having a first chain end and a second chain end bonded to opposite sides of said PFPE chain_{add}, wherein: the first chain end comprises a group of formula -C(O)NRₐR_{b}, wherein Rₐ and R_{b}, each independently, are selected from: hydrogen, linear or branched C₁-C₆ alkyl group; the second chain end comprises a group selected from: C₁-C₆ (per)fluoroalkyl group, -CF₂C(O)CF₃ and -C(OH)₂CF₃; - C(O)NRₐR_{b}, wherein Rₐ and R_{b}, each independently, are selected from: hydrogen, linear or branched C₁-C₆ alkyl group; -C(O)OR_{c}, wherein R_{c} is a linear or branched C₁-C₆ alkyl group; (B) 0.01 - 25.0 wt.%, based on the weight of component (A), of a fluorescent dye of formula (I) (e.g. a rhodamine dye). The present invention also relates to the use of the additive composition in admixture with hydrogenated or fluorinated lubricants. The additive composition is capable of imparting the lubricant with both anti-rust and fluorescence properties.

## Description

### Technical Field

The present invention relates to the field of lubricants and more particularly to an additive composition for use in admixture with hydrogenated or fluorinated lubricants. The additive composition is capable of imparting the lubricant with both anti-rust and fluorescence properties.

### Background Art

It is known that certain hydrogen-based lubricants of natural or synthetic origin, in particular certain lubricant oils, are endowed with remarkable lubricant properties and are available on the market at reasonable costs. Examples of hydrogen-based lubricant oils comprise mineral oils of hydrocarbon type, animal and vegetal hydrogenated oils, synthetic hydrogenated oils including polyalphaolefins (PAOs), dibasic acid esters, polyol esters, phosphate esters, polyesters, alkylated naphthalenes, polyphenyl ethers, polybutenes, multiply-alkylated cyclopentanes, silane hydrocarbons, siloxanes and polyalkylene glycols.

A possible alternative to hydrogen-based lubricants is represented by (per)fluoropolyether (PFPE) lubricants, i.e. lubricants comprising (per)fluorooxyalkylene chains, wherein the monomers consisting of (per)fluoroalkyl groups are joined by ether linkages. In particular, PFPE lubricants exhibit excellent thermal and chemical resistance so that they are useful in applications characterized by harsh conditions, e.g. very high temperatures, presence of oxygen, use of aggressive chemicals and radiations, etc.

A lubricant, such as an oil or a grease, is a composition generally comprising a base oil (e.g. hydrogenated or fluorinated oils) and one or more additives and, in the case of a grease, at least one thickening agent. The base oil determines the basic properties of the lubricant. The additives can make up for and improve the deficiencies in the performance of the base oil as well as impart additional properties, such as anti-rust properties, antioxidant properties, anti-wear properties, thermal stabilization and visual effect (e.g. color, fluorescence, etc.).

Depending on their chemical composition, PFPE polymers can be used both as main components of a lubricant (i.e. base oil) or as additives to be added to a lubricant to improve its properties.

For example, US5190681 (Ausimont S.r.l.) discloses the use of PFPE polymers having certain functionalized end groups as additives to impart a PFPE-based lubricant with anti-rust properties.

US2006/163532A1 (Solvay Solexis S.p.A.) discloses a lubricating composition comprising a fluorinated lubricating oil and a solvent of the oil capable to form lubricating films on surfaces by depositing a thin lubricating layer after evaporation of the solvent. In an embodiment, the lubricating composition disclosed in US2006/163532A1 includes a fluorescent dye as non-fluorinated additive, namely 2,5-bis(5-tert-butylbenzoxazol-2-yl)thiophene (commercially known as BBOT), in combination with a functional (per)fluoropolyether polymer having end groups of the type: T = -CF₃, and T' = -CF₂C(CF₃)(OH)₂ (75 mol%) and -CF₂COOH (25 mol%), i.e. a PFPE having acidic chain end groups.

Lubricants containing fluorescent dyes are particularly useful in applications where leak detection is a crucial issue, such as in hydraulic or refrigerant equipment. Indeed, by illuminating the external surface of an equipment with UV light capable of exciting the fluorescence emission of the dye it is possible to locate a leak in the equipment by observing the fluorescence emission of the leaked lubricant.

The fluorescent properties of a lubricant composition can also be advantageously exploited to determine its presence or uniform application of a lubricant coating on a surface. By irradiating the coating with UV light, in fact, it can be easily confirmed that the coating is uniformly applied on the surface, did not migrate from the original location or, when the lubricant composition is applied in a very thin layer that it can be nearly impossible to detect with the naked eye, that the coating is present on the surface as desired.

In many applications, it is desirable for the lubricant to exhibit more than one additional properties with respect to those of the base oil, for example to exhibit fluorescence and anti-rust properties. In principle, this result can be achieved through the addition of two or more additives to the base oil each providing a respective effect. In practice, however, the overall effect of a composition of additives admixed to a base oil is not easy to predict and frequently it does not correspond to the sum of the effects that can be achieved by each additive alone. The Applicant, moreover, has observed that this issue is particularly relevant when fluorescent dyes and PFPE polymers having functional terminals are simultaneously present in the additive composition or lubricant since the two compounds may interact so as to inhibit the effect of either or both.

### Summary of invention

In consideration of the above state of the art, the Applicant has faced the problem of providing an additive composition that is capable of endowing a base oil, either a hydrogenated oil or a (per)fluorinated oil, when admixed with the additive composition, with both fluorescence and anti-rust properties.

It has now been found that this technical problem may be solved by an additive composition comprising a fluorescent dye belonging to the class of xanthene dyes in combination with a functional PFPE polymer having non-acidic functional groups as chain ends of the PFPE polymer backbone.

The additive composition, when admixed to a base oil, yields a lubricant, such as an oil or a grease, having anti-rust properties and a fluorescence response upon exposure to UV light.

Moreover, the presence of non-acidic functional groups as chain ends of the PFPE polymer backbone instead of acidic groups renders the additive and the lubricant composition containing it as less corrosive with regards to metallic surfaces.

### Description of invention

According to a first aspect, the present invention relates to an additive composition comprising:
(A) at least one (per)fluoropolyether polymer [PFPE polymer_{add}] comprising a (per)fluoropolyether chain [PFPE chain_{add}] having a first chain end and a second chain end bonded to opposite sides of said PFPE chain_{add}, wherein:
   the first chain end comprises a group of formula -C(O)NRₐR_{b}, wherein Rₐ and R_{b}, each independently, are selected from: hydrogen, linear or branched C₁-C₆ alkyl group;
   the second chain end comprises a group selected from: C₁-C₆ (per)fluoroalkyl group, -CF₂C(O)CF₃ and -C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is a linear or branched C₁-C₆ alkyl group;
(B) 0.01 - 25.0 wt.%, based on the weight of component (A), of a fluorescent dye of formula (I) 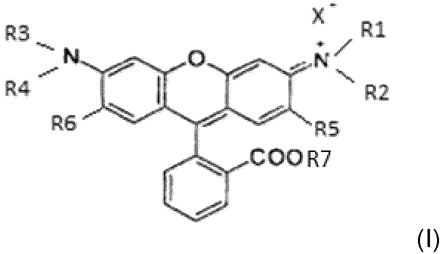 wherein:
   - R1 to R4 and R7, each independently, are selected from: H, C₁-C₃ alkyl, - CH₂COOH, -C₂H₄OH;
   - R5 and R6, each independently, are selected from: H and C₁-C₃ alkyl;
   - X is an anion selected from: halogen, HCO₂⁻ and ClO₄⁻.

According to a second aspect, the present invention relates to a lubricant composition comprising a base oil and an additive composition according to the first aspect, the base oil being selected from hydrogenated oil or (per)fluorinated oil.

According to a third aspect, the present invention relates to a method of detecting a leak of a lubricant composition from an equipment comprising:
- providing an equipment containing a lubricant composition according to the second aspect;
- irradiating an external surface of the equipment with a UV light capable of exciting the fluorescence of the dye of formula (I);
- determining the leak of the lubricant composition by observing a fluorescence emission of the fluorescent dye of formula (I) from the leaked lubricant composition on said external surface.

According to a fourth aspect, the present invention relates to a method of detecting the presence or uniform application of a lubricant coating on a substrate comprising:
- coating a surface of a substrate with a lubricant composition according to the second aspect to obtain a coated surface;
- irradiating the coated surface with a UV light to excite the fluorescence of the dye of formula (I) present in the lubricant composition;
- determining the presence or uniform application of the lubricant coating on the surface based on a fluorescence response from the coated surface.

As used herein:
- the acronym "PFPE" stands for "(per)fluoropolyether" and, when used as substantive, is intended to mean either the singular or the plural form, depending on the context;
- the prefix "(per)" in the terms "(per)fluoropolyether" and "(per)fluorinated oil" means that the polyether and the oil can be fully or partially fluorinated.

The additive composition according to the present invention comprises at least one (per)fluoropolyether polymer [PFPE polymer_{add}] (component (A)) and a fluorescent dye of formula (I) (component (B)).

The PFPE polymeradd substantially acts as fluid medium into which the fluorescent dye of formula (I) is dispersed or solubilized.

In the (per)fluoropolyether polymer [PFPE polymer_{add}] of component (A), the first chain end preferably comprises a terminal group of formula - C(O)NRₐR_{b} group where Rₐ and R_{b}, each independently, are selected from hydrogen and C₁-C₃ alkyl group (linear or branched), more preferably from hydrogen and methyl; preferably, the second chain end of the PFPE polymer_{add} comprises a group selected from: C₁-C₃ perfluoroalkyl group (e.g. -CF₃), -CF₂C(O)CF₃ and -C(OH)₂CF₃.

Since the PFPE polymer_{add} does not possess acidic functional terminal groups, i.e. -COOH groups, the additive composition results less aggressive and thus more compatible with a wide range of material, especially metallic surfaces.

In the PFPE polymer_{add}, preferably, the (per)fluoropolyether chain [PFPE chain_{add}] is a partially or fully fluorinated chain [chain (R_{f})_{add}] comprising, preferably consisting of, repeating units R°, said repeating units R° being independently selected from:
(i) -CFXO-, wherein X is F or CF₃; and
(ii) -CFXCFXO-, wherein X, equal or different at each occurrence, is F or CF₃, with the proviso that at least one of X is F.
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings : -CFXO-, -CF₂CFXO-, -CF₂CF₂CF₂O-, -CF₂CF₂CF₂CF₂O-, with each of each of X being independently F or CF₃ and Y being a C₁-C₃ perfluoroalkyl group.

Preferably, chain (Rf)_{add} complies with the following formula:

(R_{f}-_{add}-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X² and X³ is -F;
- g1, g2, g3, and g4, equal or different from each other, are each independently ≥0, such that g1+g2+g3+g4 is in the range from 2 to 300, preferably from 10 to 250, even more preferably from 15 to 200; should at least two of g1, g2, g3 and g4 be different from zero, the different recurring units are generally statistically distributed along the chain.

More preferably, in the chain (R_{f}-_{add}-I), X² and X³, equal or different from each other and at each occurrence, are independently -F or -CF₃, with the proviso that at least one of X² and X³ is -CF₃.

Even more preferably, the chain (Rf)_{add} complies with the following formula:

( R_{f}-_{add}-II) -[(CFX¹O)_{g1}(CFX²CFX³O)_{g2}(CF₂CF₂CF₂O)_{g3}(CF₂CF₂CF₂CF₂O)_{g4}-(CF(CF₃)O)_{g5}(CF₂CF(CF₃)O)_{g6}]-

wherein
- X¹ is independently selected from -F and -CF₃,
- X², X³, equal or different from each other and at each occurrence, are independently -F or -CF₃, with the proviso that at least one of X² and X³ is - F;
- g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0.

Even more preferably, in the chain (R_{f}-_{add}-II) above:
- g1, g5 and g6, equal or different from each other, are independently >0 and such that g1+g5+g6 is in the range from 2 to 300, preferably from 10 to 250; the different recurring units being statistically distributed along the chain;
- g2, g3 and g4 are equal to 0.

Preferably, the (per)fluoropolyether polymer [PFPE polymer_{add}] is a mixture of polymer compounds comprising:
(1) at least one polymer compound comprising a PFPE chain**_{add}**, preferably comprising a chain (Rf)_{add} complying with formula (R_{f}-_{add}-II) above, having a first chain end and a second chain end bonded to opposite sides of said PFPE chain**_{add}**, wherein:
   - the first chain end comprises a group of formula -C(O)NRₐR_{b} where Rₐ and R_{b}, each independently, are selected from: hydrogen, linear or branched C₁-C₆ alkyl group;
   - the second chain end comprises a group selected from: C₁-C₆ perfluoroalkyl group; -CF₂C(O)CF₃; -C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is selected from linear or branched C₁-C₆ alkyl group; and
(2) at least one polymer compound comprising a PFPE chain**_{add}**, preferably comprising a chain (Rf)_{add} complying with formula (R_{f}-_{add}-II) above, having a first chain end and a second chain end bonded to opposite sides of said branched PFPE chain**_{add}**, wherein each chain end comprises a group selected from: C₁-C₆ perfluoroalkyl group; -CF₂C(O)CF₃; - C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is selected from linear or branched C₁-C₆ alkyl group.

Preferably, the polymer compounds having at least one chain end comprising a -C(O)NH₂ group are present in the PFPE polymer_{add} mixture in amount within the range of 1 - 85 wt% based on the weight of thePFPE polymer_{add} mixture, more preferably 5 - 60 wt%, even more preferably 10 - 40 wt%.

The above-described PFPE polymers that are suitable as component A of the present invention may be prepared according to synthesis schemes well-known to the skilled person. For example, polymer compounds having terminal groups of formula -C(O)NRₐR_{b}, where Rₐ and R_{b} have the meaning indicated above, can be prepared by reacting perfluoropolyether polymers having -CFX-COOR (where e.g.: R is CH₃ or C₂H₅; X is halogen atom, such as F and Cl, or CF₃) by treatment with ammonia or an amine NRₐR_{b}, preferably in a solvent such as, for example, ethyl ether, methanol, or 1,1,2-trichlorotrifluoroethane.

The above PFPE polymers and mixtures of PFPE polymers suitable as component A of the present invention are also commercially available from Solvay Specialty Polymers Italy S.p.A.

As compound (B) the additive composition comprises a fluorescent dye, which is a xanthene dye of formula (I) 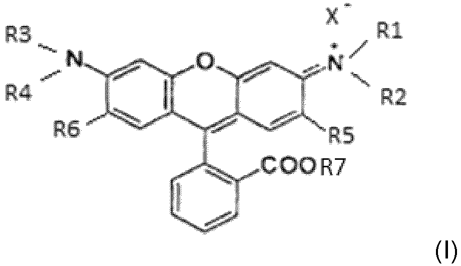 wherein:
- R1 to R4 and R7, each independently, are selected from: H, C₁-C₃ alkyl, - CH₂COOH, -C₂H₄OH;
- R5 and R6, each independently, are selected from: H and C₁-C₃ alkyl;
- X is an anion selected from: halogen, HCO₂⁻ and ClO₄⁻.

Preferably, in the above formula (I) R1 to R7, each independently, are selected from: H, methyl and ethyl.

Preferably, the fluorescent dye is selected from: Rhodamine B (CAS n. 81-88-9), Rhodamine 6G (CAS n. 989-38-8), Rhodamine 123 (CAS n. 62669-70-9) and Rhodamine 110 (CAS n. 13558-31-1). More preferably, the fluorescent dye is Rhodamine B.

The fluorescent dye of formula (I) can be present in component (B) of the additive composition either alone or as a mixture of two or more compounds of formula (I).

The fluorescent dye is a ultraviolet (UV) fluorescent compound that absorbs light in the ultraviolet or near ultraviolet region of the electromagnetic spectrum. Under illumination by a UV light that emits radiation with wavelength within the range from 10 nm to 750 nm (e.g. a Wood's lamp), the fluorescent dye produces a fluorescence emission that may be visually detected. For example, Rhodamine B (dissolved in ethanol) is characterized by an excitation peak at 510 nm and an emission peak at 565 nm.

The component (B) is present in the additive composition in amounts within the range of from 0.01 wt.% to 25.0 wt.%, the weight percentages being referred to the weight of component (A). Preferably the dye of formula (I) is in an amount within the range 0.01 - 25.0 wt.%, preferably 0.01 to 15.0 wt.%, even more preferably from 0.02 to 10.0 wt.% and still more preferably from 0.02 to 5.0 wt.% based on the weight of component (A).

The fluorescent dyes of formula (I) are well-known in the art. They can be prepared using known synthesis processes and are commercially available.

If required, the additive composition according to the present invention may contain one or additional components, such as for example those commonly used in lubricant compositions.

Non-limiting examples of suitable additives are the following: antioxidants, thermal stabilizers, pour-point depressants, anti-wear agents, rheological modifiers, corrosion inhibitors, pigment, dyestuffs and fillers. These additional components should be chosen so as not to interfere with the fluorescence of the additive composition or alternatively, the fluorescent dyes are chosen on the basis that there is no chemical or physical reaction between any of the components of the additive composition which might otherwise interfere with or hinder the fluorescence response of the dye under UV radiation.

The additive compositions of the invention can be prepared, for example, by mixing the compounds (A) and (B) by stirring, at room temperature, using conventional mixers, such as a Silverson-type shear mixer.

To favor the dispersion of the fluorescent dye of component (B) in the PFPE polymer of component (A), the compound (B) may be dissolved in a solvent, such as ethanol, methanol, water or other common solvents, for example in an amount of 0.5 - 20 wt% based on the weight of the solvent, prior to being mixed with component (A). The solvent used as solubilizing agent may then be removed, for example by stripping with inert gas under vacuum and/or thermal evaporation (e.g. at ca. 100 °C).

Any optional components may be mixed together with components (A) and (B) at the time that the additive composition is prepared, The optional components, however, may also be added subsequently to the additive composition formed by components (A) and (B). If desired, the optional components may also be added when or after that the additive composition is added to the base oil to prepare a lubricant composition.

The additive composition is preferably added to the base oil in an amount ranging from 0.05 wt. % to 30.0 wt.%, based on the weight of the base oil, more preferably from 0.1 wt. % to 15.0 wt.%, even more preferably from 1 wt. % to 10.0 wt.%. Most preferably , the additive composition contains about 0.1 wt.% of the fluorescent dye and is added to the base oil in an amount of about 5.0 wt.%.

According to a second aspect, the present invention is directed to a lubricant composition comprising a base oil and the additive composition described herein. The base oil is selected from hydrogenated oil or (per)fluorinated oil.

The base oil may be a mixture of one or more hydrogenated oils or one or more (per)fluorinated oils. When mixtures of oils are used, the oils are selected so that they are compatible with each other and for uniform mixture, stable over time.

Preferably, the hydrogenated oil is selected from mineral oils or synthetic oils, more preferably from: polyalphaolefins (PAOs), dibasic acid esters, polyol esters, phosphate esters, polyesters, alkylated naphthalenes, polyphenyl ethers, polybutenes, multiply-alkylated cyclopentanes, silane hydrocarbons, siloxanes and polyalkylene glycols. The above base oils may be used singly or in combination of two or more.

Preferably, the base oil is a (per)fluorinated base oil.

More preferably, said (per)fluorinated base oil is a (per)fluoropolyether base oil [PFPE base oil].

Preferably, said PFPE base oil is selected from the PFPE polymerₒᵢₗ (A-I) and [PFPE copolymerₒᵢₗ] (A-II) describe below:
(A-I) (per)fluoropolyether polymer [PFPE polymerₒᵢₗ] comprising a (per)fluoropolyether chain [PFPE chainₒᵢₗ] having two chain ends bonded to opposite sides of said PFPE chainₒᵢₗ, both chain ends comprising a linear or branched perfluorinated alkyl group having from 1 to 6 carbon atoms, said PFPE polymerₒᵢₗ having a number average molecular weight from 500 to 100000, preferably from 2000 to 50000 as measured by ¹⁹F-NMR;
(A-II) at least one block copolymer [PFPE copolymerₒᵢₗ] comprising a first and a second (per)fluoropolyether chain [PFPE chainₒᵢₗ] each having two chain ends, wherein the first chain end of said first and second PFPE chainₒᵢₗ comprises a perfluorinated alkyl group and the second chain end of said first and second PFPE chainₒᵢₗ are bonded to each other via:
   - at least one first block [block (1)] complying with formula (I): 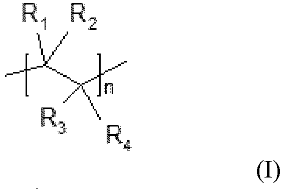 wherein
      n is 0 or an integer from 1 to 3;
      R₁ to R₄, each independently, is selected in the group comprising, preferably consisting of, fluorine atom, perfluorinated linear or branched alkyl group having from 1 to 6 carbon atoms, group of formula (II)
(II) -(R₁₀)ₜ[C(R₁₁)(R₁₂)-C(R₁₃)(R₁₄)(R₁₅)]_{z}

   wherein:
   R₁₀ is an oxygen atom, or a bi-/tri-/tetravalent perfluorinated alkyl chain comprising from 1 to 24 carbon atoms optionally interrupted by and/or comprising at least one oxygen atom,
   t is zero or 1;
   z is an integer from 1 to 3;
   R₁₁ to R₁₅, each independently, is selected in the group comprising, preferably consisting of, fluorine atom, perfluorinated linear or branched alkyl group having from 1 to 6 carbon atoms and a group of formula (III):

   (III) -[(A^)_{a^}-(B^)_{v^}-(E^)_{L^}]_{u^}-(C^)-T

   wherein
   a^ is zero or 1;
   v^ is zero or an integer from 1 to 3;
   L^ is zero or an integer from 1 to 250;
   u^ is zero or an integer from 1 to 50;
   A^ is a PFPE chain;
   B^ is a group of formula:

      -[C(R_{1^})(R_{2^})-C(R_{3^})(R_{4^})]-
wherein R_{1^} to R_{4^} each independently has the meaning defined above for each of R₁ to R₄,
E^ is a group of formula -(CR_{100^}R_{101^}CR_{102^}R_{103^})-
wherein
R_{100^} and R_{101^}, each independently, are selected from: hydrogen atom; halogen atom, more preferably fluorine or chlorine atom, and
R_{102^} and R_{103^} are independently selected from: hydrogen atom; halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are fluorine atoms and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
   - at least one second block [block (2)] complying with formula (IV):

      (IV) -[(CR^{1*}R^{2*}CR^{3*}R^{4*})_{n*}-(E)_{L}]-
   wherein
   n* is zero or an integer from 1 to 250,
   L is zero or an integer from 1 to 250 and
   the sum of n* and L is 0 or from 1 to 250;
   R^{1*} and R^{2*} are independently selected from hydrogen atom, halogen atom, more preferably fluorine or chlorine atom, and
   R^{3*} and R^{4*} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
   one of R^{1*} and R^{2*} and one of R^{3*} and R^{4*} are fluorine atoms and the other of R^{1*} and R^{2*} and the other of R^{3*} and R^{4*} together form a perhalogenated cyclic ring having from 4 to 6 members, optionally comprising heteroatoms, such as oxygen atoms;
   E has the same meaning provided for E^ above;
      - optionally, at least one third block [block (3)] comprising a PFPE chain; with the proviso that:
         in said PFPE copolymer:
      - at least one of n, n* and L is different from 0;
      - said block (1), said block (2) and, when present, said block (3) are statistically distributed;
         in said formula (I):
      - at least one of R₁ to R₄ is a group of formula (II),
      - one of R₁₁ or R₁₂ and one of R₁₃ to R₁₅, is a group of formula (III);
         in said formula (III) and said formula (IV):
      - the recurring units are statistically distributed,
         in said formula (III):
      - when a^ is 1 at least one of v^ and L^ is different from 0.

Preferably, each of the PFPE chainₒᵢₗ mentioned above, both in the PFPE polymerₒᵢₗ and in the PFPE copolymerₒᵢₗ, is a partially or fully fluorinated chain [chain (R_{f-oil})] comprising, preferably consisting of, repeating units R°, said repeating units R° being independently selected from:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)w-CFZ-O- wherein w is an integer from 0 to 3 and Z is a group of general formula -O-R_{(f-a)}-Y, wherein R_{(f-a)} is a fluoropolyoxyalkene chain comprising a number of recurring units from 0 to 10, said recurring units being chosen among the followings: -CFXO-, -CF₂CFXO-, -CF₂CF₂CF₂O-, -CF₂CF₂CF₂CF₂O-, with each of X being independently F or CF₃ and Y being a C₁-C₃ perfluoroalkyl group.

Preferably, the PFPE chainₒᵢₗ is a partially or fully fluorinated chain [chain (Rf)] comprising, preferably consisting of, repeating units R°, said repeating units R° being independently selected from:
(i) -CFXO-, wherein X is F or CF₃; and
(ii) -CFXCFXO-, wherein X, equal or different at each occurrence, is F or CF₃, with the proviso that at least one of X is -CF₃.

Preferably, each of the PFPE chainsₒᵢₗ mentioned above, both in the PFPE polymerₒᵢₗ and in the PFPE copolymerₒᵢₗ, comprises a chain (R_{f-oil}) complying with any of formulae (R_{f}-ₒᵢₗ-I) and (R_{f}-ₒᵢₗ-II) below:

(R_{f}-ₒᵢₗ-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are each independently ≥0, such that g1+g2+g3+g4 is in the range from 2 to 300, preferably from 10 to 250, even more preferably from 15 to 200; should at least two of g1, g2, g3 and g4 be different from zero, the different recurring units are generally statistically distributed along the chain;

(R_{f}-ₒᵢₗ-II) -[(CFX¹O)_{g1}(CFX²CFX³O)_{g2}(CF₂CF₂CF₂O)_{g3}(CF₂CF₂CF₂CF₂O)_{g4}-(CF(CF₃)O)_{g5}(CF₂CF(CF₃)O)_{g6}]-

wherein
- X¹ is independently selected from -F and -CF₃,
- X², X³, equal or different from each other and at each occurrence, are independently -F, -CF₃, with the proviso that at least one of X is -F;
- g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0.

In a preferred embodiment, chain (R_{f}-ₒᵢₗ) complies with formula (R_{f}-ₒᵢₗ-I) above.

Preferably, the PFPE base oil is a PFPE polymerₒᵢₗ (A-I).

Preferably, said PFPE polymerₒᵢₗ (A-I) has a viscosity at 25°C of from 10 to 3000 cSt, more preferably of from 15 to 2000 cSt and even more preferably of from 100 to 500 cSt.

Preferably, said PFPE chainₒᵢₗ in the PFPE base oil comprises chain R_{f-oil} complying with formula (R_{f}-ₒᵢₗ₋II) above.

Preferably, in said chain (R_{f}-ₒᵢₗ₋II), X¹ is -F.

Preferably, in said chain (R_{f}-ₒᵢₗ₋II), X² and X³ are both F.

Preferably, in said chain (R_{f}-ₒᵢₗ₋II), g1 and g2, equal or different, are both >0.

Preferably, in said chain (R_{f}-ₒᵢₗ₋II), g3 and g4 are both 0.

Preferably, in said chain (R_{f}-ₒᵢₗ₋II), g1+g2 is in the range from 20 to 200.

Preferably, the PFPE base oil is the PFPE copolymerₒᵢₗ (A-II).

Preferably, the PFPE copolymerₒᵢₗ (A-II) has a number average molecular weight from 500 to 100000, preferably from 2000 to 50000 as measured by ¹⁹F-NMR.

It will be understood by those skilled in the art that said first chain end of said first and second PFPE chain correspond to the two chain ends of the PFPE copolymerₒᵢₗ.

Preferably, said first chain end of said first and second PFPE chainₒᵢₗ comprises a perfluorinated linear alkyl group having from 1 to 3 carbon atoms.

Preferably, said perfluorinated linear alkyl groups are the same for both said first and second chain end.

Preferably, said first chain end of said first and second PFPE chainₒᵢₗ and said T in formula (III), equal or different from each other, are a perfluorinated alkyl group having from 1 to 3 carbon atoms.

For example, T and T', equal to or different from each other, are a fluorine atom or a group selected from -CF₃, -CF₂CF₃, -CF₂CF₂CF₃, -CF(CF₃)₂. Other halogenated groups, such as for example -CF₂Cl and -CF₂CF₂Cl, can be present.

Preferably, in said first and second PFPE chainₒᵢₗ, A^ and C^ are equal or different from each other.

Preferably, in the PFPE copolymerₒᵢₗ, said first PFPE chainₒᵢₗ is bonded to said block (1) via a sigma bond or a group -(C)- selected from -CF₂-, - CF₂CF₂- or -O-.

Preferably, in the PFPE copolymer, said block (2) is bonded to said second PFPE chainₒᵢₗ via a sigma bond or a group -(C)- selected from -CF₂-, - CF₂CF₂- or -O-.

Preferably, when both said block (1) and said block (2) are present, they are linked via a sigma bond.

Preferably, in the PFPE copolymerₒᵢₗ, the sum of (n + n* + v^) is from 1 to 15, preferably from 1 to 11, more preferably from 1 to 9.

Preferably, in the PFPE copolymerₒᵢₗ, the sum of (L+L^) is from 1 to 500, preferably from 2 to 500, more preferably from 2 to 300.

According to a preferred embodiment, the PFPE copolymerₒᵢₗ comprises a first and a second PFPE chainₒᵢₗ, each having two chain ends, wherein the first chain end of said first and second PFPE chainₒᵢₗ comprises a perfluorinated alkyl group, preferably a perfluorinated linear alkyl group having from 1 to 3 carbon atoms, and the second chain end of said first and second PFPE chain are bonded to each other via:
- at least one block (2) complying with formula (IV):

   (IV) -[(CR¹*R²*C^{R}3*R⁴*)ₙ*-(E)_{L}]-

   wherein
   n* is an integer from 1 to 250,
   L is an integer from 1 to 250, and the sum of n* and L is from 1 to 250;
   R¹* and R²* are fluorine atom, and
   R³* and R⁴* are independently selected from halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
   E is a group of formula -(CR100^R101^CR102^R103^)-
   wherein
   R_{100^} and R_{101^} are independently selected from halogen atom, preferably fluorine or chlorine atom, and
   R_{102^} and R_{103^} are independently selected from halogen atom, preferably fluorine or chlorine atom; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
      and
- optionally, at least one block (3) comprising a PFPE chain.

Preferably, said PFPE copolymerₒᵢₗ has a viscosity, measured at 25°C, that is higher than 1,000 mm²/s, more preferably higher than 2,000 mm²/s and even more preferably higher than 3,000 mm²/s.

Preferably, said PFPE copolymerₒᵢₗ has a viscosity, measured at 25°C, that is lower than 5,000,000 mm²/s, more preferably lower than 2,500,000 mm²/s, and even more preferably lower than 2,000,000 mm²/s.

Preferably, said PFPE copolymerₒᵢₗ has a viscosity, measured at 25°C, that is of from 3,000 to 1,500,000 mm²/s, more preferably of from 3,500 to 1,000,000 mm²/s and even more preferably of from 4,000 to 950,000 mm²/s.

Herein, the viscosity of the PFPE polymers and copolymers are meant to be measured at 25°C with an Anton Paar MCR 502 parallel plate rheometer equipped with parallel plates of 25 mm, at 1 rad/s and at 25°C.

The PFPE copolymerₒᵢₗ can be prepared via known processes, for example as disclosed in WO 2008/065163 (SOLVAY SOLEXIS S.P.A.) or via supercritical fluid fractionation.

More preferably, the PFPE copolymerₒᵢₗ can be prepared via a process [process (P)], which comprises
(a) contacting:
   - at least one (per)fluoropolyether polymer comprising peroxidic groups [PFPE peroxy];
      with
   - at least one perfluorinated compound of formula (X-p): 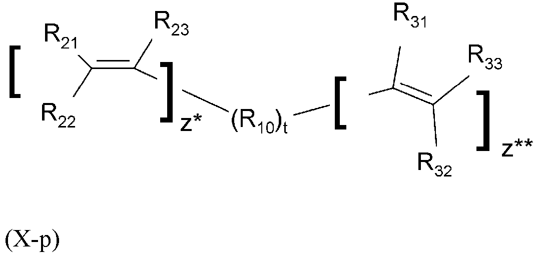 wherein
      each of R₂₁ to R₂₃ and R₃₁ to R₃₃ is independently fluorine atom, perfluorinated alkyl group having from 1 to 3 carbon atoms,
      R₁₀ is an oxygen atom, or a perfluorinated alkyl chain comprising from 2 to 18 carbon atoms, optionally and preferably interrupted by and/or comprising at least one oxygen atom,
      t is zero or 1, preferably 1;
      each of z* and z** is independently 1 or 2;
         and/or
   - at least one compound [compound (O)] selected in the group comprising, preferably consisting of:
      (i) hydrogenated or (per)halogenated olefin comprising from 2 to 8 carbon atoms, preferably ethylene (E), propylene (PP), tetrafluoroethylene (TFE), hexafluoropropylene (HFP), chlorotrifluoroethylene (CTFE), and 1,1-difluoroethylene (VDF);
      (ii)

         CF₂=CFOR_{f},

         wherein
         R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyl; C₅-C₆ cyclic perfluoro-alkyl, and C₂-C₆ perfluoro-oxy-alkyl, comprising at least one catenary oxygen atom, preferably R_{f2} is - CF₂CF₃ (MOVE1), -CF₂CF₂OCF₃ (MOVE2), or -CF₃ (MOVE3);
      (iii) perfluorodioxoles having formula: 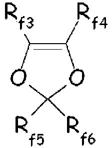 wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃; in the presence of UV radiation or under heating,
         provided that the amount of the compound of formula (X-p) is less than 5 wt.% of the amount of the PFPE peroxy.

Optionally, a fluorination step can be performed.

The PFPE polymerₒᵢₗ can be prepared by means of processes that are well-known to the person skilled in the art. They are also commercially available from Solvay Specialty Polymers Italy S.p.A., for example under the trade names Fomblin^{®} Y, Fomblin^{®} M, Fomblin^{®} Z.

The lubricant composition may be in the form of a lubricant oil or a lubricant grease. When the lubricant composition is in the form of a grease, it contains at least one thickening agent (i.e. thickener).

Preferably, the thickener is in the form of powder having an average particle size (d₅₀) within the range of 1 - 15 micrometer, more preferably 2 - 12 micrometers, and still more preferably 3-10 micrometers, as measured by laser diffraction particle size analysis as volume particle size distribution.

According to an embodiment, said thickener is selected from soap thickeners.

Soap thickeners include for example simple soaps that are organic salts of long chain organic acid with alkali metal, such as lithium, calcium, sodium, aluminum, barium, and complex soaps including simple soaps and a complexing agent. Suitable examples are lithium 12-hydroxystearate, lithium complex, calcium complex and aluminum complex.

According to an embodiment, said thickener is selected from non-soap thickeners.

Non-soap thickeners include for example polyurea, clay, fumed silica, fluorinated polymer, and/or aromatic polymer.

Preferably, said thickener is a fluorinated polymer.

According to this embodiment, said fluorinated polymer is poly(tetrafluoroethylene) (PTFE).

Preferably, said thickener is an aromatic polymer.

According to this embodiment, said aromatic polymer has a melting point of at least 150°C.

Preferably, said aromatic polymer is in the form of powder having a d₅₀ measured by laser diffraction particle size analysis as volume particle size distribution, within the range 1 - 15 micrometer, and a surface area (determined by gas adsorption using the BET method according to ISO 9277) within the range of from 0.5 to less than 5 m²/g.

Said at least one aromatic polymer is advantageously selected in the group comprising, preferably consisting of:
(a) poly(arylene sulphides) (PAS) polymer;
(b) poly(phenylene oxides) (PPO) polymer;
(c) poly(aryl ether ketone) (PAEK) polymer; and
(d) poly(aryl ether sulfone) (PAES) polymer.

Preferably, said at least one aromatic polymer is a PAS polymer, such as those described in WO 2015/177857, WO2007/082829 and WO2023/078890.

Preferably, the total amount of thickening agent in the grease composition is within the range of 0.1 - 50.0 wt.%, more preferably 1.0 - 35 wt.%, based on the weight of the grease composition.

The additive compositions of the present invention are stable, i.e. they have a high shelf life, in a wide range of temperatures, for long periods, without clear separation of the components.

The additive compositions of the present invention can be used to impart a base oil with both anti-rust and fluorescence properties. The anti-rust effect can be determined by subjecting the lubricant containing the additive composition to a test according to ASTM D665 as described in the enclosed examples.

The fluorescent properties of the lubricants can be exploited to detect a leak of a lubricant from an equipment containing it, such as a hydraulic or refrigerant equipment or a container. Indeed, upon the leakage of a lubricant containing the additive composition of the present invention, the site of the leakage can be detected by irradiating the external surface of the equipment using a UV light source that emits radiations capable of exciting the fluorescence of the fluorescent dye of the additive composition. For example, a light source with a wavelength within the range from 10 nm to 750 nm, preferably from 400 nm to about 600 nm, can be used. By observing the fluorescence emission of the leaked lubricant on the external surface, the position of the leakage can be detected.

In a similar way, the fluorescent properties of a lubricant composition, especially a lubricant composition in the form of a grease, can be used to determine its presence or uniform application on a surface of a substrate, e.g. machine elements, such as bearings, pins, shafts and gears, thus allowing the end-user to verify the lubrication of the entirety of the surface or know when it is time to re-lubricate.

The present invention will be now described in more details by reference to the following examples, whose purpose are merely illustrative and do not limit the scope of the present invention

### Examples

Determination of the anti-rust properties

The anti-rust properties of the lubricant compositions have been determined following the test described in ASTM D665. The result of the test is expressed in terms of "pass" or "fail".

Determination of the fluorescence properties

The fluorescence properties of the additive compositions and lubricant compositions have been evaluated visually by depositing a drop of the additive composition paper sheet followed by UV irradiation with a Wood's lamp. If the drop brightens, the additive composition is considered fluorescent.

The result of the fluorescence test is expressed in terms of "YES" (i.e. fluorescence observed) or "NO" (i.e. fluorescence not observed).

### Materials used

- Rhodamine B (Sigma Aldrich);
- Fluorescein sodium salt (Sigma Aldrich);
- 2,5-bis(5-tert-butylbenzoxazol-2-yl)thiophene (BBOT - Sigma Aldrich);
- Polymer 1: mixture of PFPEs of formula

   T-O(CF₂CF(CF₃)O)ₙ(CF₂O)ₘ(CF(CF₃)O)ᵣCF₂-T'

   wherein:
   T is a group selected from: -C(O)NH₂; CF₃; -CF₂C(O)CF₃; -C(OH)₂CF₃; -C(O)OCH₃; T' is a group selected from: -C(O)NH₂; -F; CF₃; -CF₂C(O)CF₃; -C(OH)₂CF₃; -C(O)OCH₃; the ratio n/(m+r) is about 15; the number average molecular weight is about 2600; the total amount of polymer compounds having at least one of -C(O)NH₂ group being about 30 wt% of the weight of the PFPE mixture;
- Polymer 2: mixture of functional PFPEs of formula

   T-O(CF₂CF(CF₃)O)ₙ(CF₂O)ₘ(CF(CF₃)O)ᵣCF₂-T'

   wherein:
   T is a group selected from: CF₃; -CF₂C(O)CF₃; -C(OH)₂CF₃; -C(O)OCH₃; T' is a group selected from: -C(O)OH; -F; CF₃; -CF₂C(O)CF₃; -C(OH)₂CF₃; -C(O)OCH₃; the ratio n/(m+r) is about 15; the number average molecular weight is about 2600; the total amount of polymer compounds having at least one -C(O)OH group being about 30 wt% of the weight of the PFPE mixture;
- Base oil Fomblin^{®} L-VAC Y25/6 (Solvay Specialty Polymers) complying with formula:

   CF₃O(CF(CF₃)CF₂O)ₘ(CF₂O)ₙCF₃

   wherein: m/n=40/1, the average number molecular weight (Mn) is 2400 and the kinematic viscosity at 20°C is 250 cSt (measured according to ASTM D445).

### Preparation of the additive compositions

An additive composition AC1 according to the present invention has been prepared by stirring with a Silverson shear mixer, at ambient temperature (ca. 25 °C), a mixture of 500 g of Polymer 1 (component (A)) and 0.5 g of Rhodamine B (CAS n. 81-88-9) as fluorescent dye (component (B)).

The additive composition AC1 contains 0.1 wt.% of the fluorescent additive of component (B) based on the weight of component (A).

For comparison purposes, following the same procedure, three additive compositions - AC2* to AC5* - have been prepared using Polymer 2 instead of Polymer 1 and/or a fluorescent dye selected from Fluorescein and BBOT instead of Rhodamine B.

The comparative additive composition AC5*, which substantially corresponds to the composition disclosed in US 2006/163352 A1, contains a PFPE polymer (A) having acidic chain ends and the compound BBOT (2,5-bis(5-tert-butylbenzoxazol-2-yl)thiophene) as fluorescent dye (B).

### Preparation of the lubricant compositions

A lubricant composition according to the invention has been prepared by mixing under stirring at ambient temperature the additive composition AC1 as prepared above with the base oil at a concentration of 5 wt.% of AC1 with respect to the weight of the base oil.

For comparison purposes, following the same procedure, comparative lubricant compositions have been prepared using the additive compositions AC2* - AC5* described above instead of AC1 and the same base oil.

The composition of the materials tested and the results of their characterization are reported in Table 1.

**TABLE 1**

| Sample | Fluorescence on Additive Composition | Fluorescence on Lubricant Composition | Anti-rust on Lubricant Composition |
|---|---|---|---|
| AC1 (Rhodamine B + Polymer 1) | YES | YES | PASS |
| AC2* (Rhodamine B + Polymer 2) | NO | NO | FAIL |
| AC3* (BBOT + Polymer 1) | NO | NO | PASS |
| AC4* (Fluoresceina + Polymer 1) | NO | n.d. | n.d. |
| AC5* (BBOT + Polymer 2) | YES | YES | FAIL |

| | | | |
|---|---|---|---|
| (*) Comparative examples | | | |

The results of Table 1 show that the additive composition of the invention imparts both anti-rust and fluorescence properties to the base oil. Replacing the fluorescent dye of formula (I) with a fluorescent dye of the prior art and/or the PFPE polymer results in lubricants exhibiting none or only one of the two properties.

## Claims

1. An additive composition comprising:
(A) at least one (per)fluoropolyether polymer [PFPE polymer_{add}] comprising a (per)fluoropolyether chain [PFPE chain_{add}] having a first chain end and a second chain end bonded to opposite sides of said PFPE chain_{add}, wherein:
the first chain end comprises a group of formula -C(O)NRₐR_{b}, wherein Rₐ and R_{b}, each independently, are selected from: hydrogen, linear or branched C₁-C₆ alkyl group;
the second chain end comprises a group selected from: C₁-C₆ (per)fluoroalkyl group, -CF₂C(O)CF₃ and -C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is a linear or branched C₁-C₆ alkyl group;
(B) 0.01 - 25.0 wt.%, based on the weight of component (A), of a fluorescent dye of formula (I) 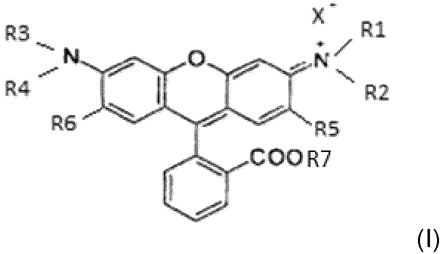 wherein:
- R1 to R4 and R7, each independently, are selected from: H, C₁-C₃ alkyl, -CH₂COOH, -C₂H₄OH;
- R5 and R6, each independently, are selected from: H and C₁-C₃ alkyl;
- X is an anion selected from: halogen, HCO₂⁻ and ClO₄⁻.

2. The additive composition of claim 1, wherein the (per)fluoropolyether chain [PFPE chain_{add}] is a partially or fully fluorinated chain [chain (R_{f})_{add}] comprising, preferably consisting of, repeating units R°, said repeating units R° being independently selected from:
(i) -CFXO-, wherein X is F or CF₃; and
(ii) -CFXCFXO-, wherein X, equal or different at each occurrence, is F or CF₃, with the proviso that at least one of X is -CF₃.
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings: -CFXO- , -CF₂CFXO-, -CF₂CF₂CF₂O-, - CF₂CF₂CF₂CF₂O-, with each of each of X being independently F or CF₃ and Y being a C₁-C₃ perfluoroalkyl group.

3. The additive composition of any of claims 1 to 2, wherein the chain (Rf) complies with the following formulae (R_{f}-_{add}-I):
R_{f}-_{add}-I) -[(CFX¹O)_{g1}(CFX²CFX³O)_{g2}(CF₂CF₂CF₂O)_{g3}(CF₂CF₂CF₂CF₂O)_{g4}]-
wherein
- X¹ is independently selected from -F and -CF₃,
- X², X³, equal or different from each other and at each occurrence, are independently -F, -CF₃, with the proviso that at least one of X² and X³ is -F;
- g1, g2, g3, and g4, equal or different from each other, are each independently ≥0, such that g1+g2+g3+g4 is in the range from 2 to 300, preferably from 10 to 250, even more preferably from 15 to 200; should at least two of g1, g2, g3 and g4 be different from zero, the different recurring units are statistically distributed along the chain.

4. The additive composition of any of claims 1 to 3, wherein the chain (Rf) complies with the following formulae (R_{f}-_{add}-II):
(R_{f}-_{add}-II) -[(CFX¹O)_{g1}(CFX²CFX³O)_{g2}(CF₂CF₂CF₂O)_{g3}(CF₂CF₂CF₂CF₂O)_{g4}-(CF(CF₃)O)_{g5}(CF₂CF(CF₃)O)_{g6}]-
wherein
- X¹ is independently selected from -F and -CF₃,
- X², X³, equal or different from each other and at each occurrence, are independently -F, -CF₃, with the proviso that at least one of X² and X³ is -F;
- g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0;

5. The additive composition of claim 4, wherein in the formula (R_{f}-_{add}-II):
- g1, g5 and g6, equal or different from each other, are independently >0 and such that g1+g5+g6 is in the range from 2 to 300, preferably from 10 to 250; the different recurring units being statistically distributed along the chain;
- g2, g3, g4 are equal to 0.

6. The additive composition of any of claims 1 to 5, wherein the PFPE polymer_{add} is a mixture of polymer compounds comprising:
(1) at least one polymer compound comprising a PFPE chain**_{add}**, preferably comprising a chain (Rf)_{add} complying with formula (R_{f}-_{add}-II) above, having a first chain end and a second chain end bonded to opposite sides of said PFPE chain**_{add}**, wherein:
- the first chain end comprises a group of formula -C(O)NRₐR_{b} where Rₐ and R_{b}, each independently, are selected from: hydrogen, linear or branched C₁-C₆ alkyl group;
- the second chain end comprises a group selected from: C₁-C₆ perfluoroalkyl group; -CF₂C(O)CF₃; -C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is selected from linear or branched C₁-C₆ alkyl group; and
(2) at least one polymer compound comprising a PFPE chain**_{add}**, preferably comprising a chain (Rf)_{add} complying with formula (R_{f}-_{add}-II) above, having a first chain end and a second chain end bonded to opposite sides of said branched PFPE chain**_{add}**, wherein each chain end comprises a group selected from: C₁-C₆ perfluoroalkyl group; -CF₂C(O)CF₃; -C(OH)₂CF₃; -C(O)NRₐR_{b}, wherein Rₐ and R_{b}, each independently, are selected from: hydrogen, linear or branched C₁-C₆ alkyl group; -C(O)OR_{c}, wherein R_{c} is selected from linear or branched C₁-C₆ alkyl group.

7. The additive composition of any of claims 1 to 6, wherein the dye of formula (I) is selected from: Rhodamine B, Rhodamine 6G, Rhodamine 123 and Rhodamine 110; preferably the dye of formula (I) is Rhodamine B.

8. The additive composition according to any one of the claims 1 to 7, wherein the dye of formula (I) is in an amount within the range 0.01 - 25.0 wt.%, preferably 0.01 to 15.0 wt.%, even more preferably from 0.02 to 10.0 wt.% and still more preferably from 0.02 to 5.0 wt.% based on the weight of component (A).

9. A lubricant composition comprising a base oil and an additive composition according to any one of the claims 1 to 8, the base oil being selected from hydrogenated oil or (per)fluorinated oil.

10. The lubricant composition according to claim 9, wherein the (per)fluorinated base oil comprises at least one of: (per)fluoropolyether polymer (A-I), and (per)fluoropolyether block copolymer (A-II):
(A-I) (per)fluoropolyether polymer [PFPE polymerₒᵢₗ] comprising a (per)fluoropolyether chain [PFPE chainₒᵢₗ] having two chain ends bonded to opposite sides of said PFPE chain**ₒᵢₗ**, both chain ends comprising a linear or branched perfluorinated alkyl chain having from 1 to 6 carbon atoms, said PFPE polymerₒᵢₗ having a number average molecular weight from 500 to 100000, preferably from 2000 to 50000 as measured by ¹⁹F-NMR; or
(A-II) at least one block copolymer [PFPE copolymerₒᵢₗ] comprising a first and a second (per)fluoropolyether chain [PFPE chainₒᵢₗ] each having two chain ends, wherein the first chain end of said first and second PFPEₒᵢₗ chain comprises a perfluorinated alkyl group and the second chain end of said first and second PFPE chainₒᵢₗ are bonded to each other via:
- at least one first block [block (1)] complying with formula (I): 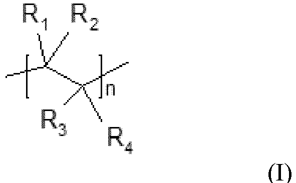 wherein
n is 0 or an integer from 1 to 3;
R₁ to R₄, each independently, is selected in the group comprising, preferably consisting of, fluorine atom, perfluorinated linear or branched alkyl group having from 1 to 6 carbon atoms, group of formula (II)
(II) -(R₁₀)ₜ[C(R₁₁)(R₁₂)-C(R₁₃)(R₁₄)(R₁₅)]_{z}
wherein:
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1;
z is an integer from 1 to 3;
R₁₁ to R₁₅, each independently, is selected in the group comprising, preferably consisting of, fluorine atom, perfluorinated linear or branched alkyl group having from 1 to 6 carbon atoms and a group of formula (III):
-[(A^)_{a^}(B^)_{v^}-(E^)_{L^}]_{u^}-(C^)-T (III)
wherein
a^ is zero or 1;
v^ is zero or an integer from 1 to 3;
L^ is zero or an integer from 1 to 250;
u^ is zero or an integer from 1 to 50;
A^ is a PFPE chain;
B^ is a group of formula:
-[C(R_{1^})(R_{2^})-C(R_{3^})(R_{4^})]-
wherein R_{1^} to R_{4^} each independently has the meaning defined above for each of R₁ to R₄,
E^ is a group of formula -(CR_{100^}R_{101^}CR_{102^}R_{103^})- wherein
R_{100^} and R_{101^}, each independently, are selected from: hydrogen atom; halogen atom, more preferably fluorine or chlorine atom, and
R_{102^} and R_{103^} are independently selected from: hydrogen atom; halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or one of R_{100^} and R_{101^} and one of R_{102^} and R_{103^} are fluorine atoms and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
- at least one second block [block (2)] complying with formula (IV):
-[(CR^{1*}R^{2*}CR^{3*}R^{4*})_{n*}-(E)_{L}]- (IV)
wherein
n* is zero or an integer from 1 to 250,
L is zero or an integer from 1 to 250 and
the sum of n* and L is 0 or from 1 to 250;
R^{1*} and R^{2*} are independently selected from hydrogen atom, halogen atom, more preferably fluorine or chlorine atom, and
R^{3*} and R^{4*} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or one of R^{1*} and R^{2*} and one of R^{3*} and R^{4*} are fluorine atoms and the other of R^{1*} and R^{2*} and the other of R^{3*} and R^{4*} together form a perhalogenated cyclic ring having from 4 to 6 members, optionally comprising heteroatoms, such as oxygen atoms;
E has the same meaning provided for E^ above;
- optionally, at least a third block [block (3)] comprising a PFPE chain;
with the proviso that:
in said PFPE copolymer:
- at least one of n, n* and L is different from 0;
- said block (1), said block (2) and, when present, said block (3) are statistically distributed;
in said formula (I):
- at least one of R₁ to R₄ is a group of formula (II),
- one of R₁₁ or R₁₂ and one of R₁₃ to R₁₅, is a group of formula (III);
in said formula (III) and said formula (IV):
- the recurring units are statistically distributed,
in said formula (III):
- when a^ is 1 at least one of v^ and L^ is different from 0.

11. The lubricant composition according to any of claims 9 to 10, wherein each of the PFPE chainsₒᵢₗ in the PFPE polymer and PFPE copolymer is a partially or fully fluorinated chain [chain (Rf-on)] comprising, preferably consisting of, repeating units R°, said repeating units R° being independently selected from:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv)
-CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of recurring units from 0 to 10, said recurring units being chosen among the followings: -CFXO-, -CF₂CFXO-, -CF₂CF₂CF₂O-, - CF₂CF₂CF₂CF₂O-, with each of-X being independently F or CF₃ and Y being a C₁-C₃ perfluoroalkyl group.

12. The lubricant composition according to claim 11, wherein the PFPE chainₒᵢₗ is a partially or fully fluorinated chain [chain (Rf)] comprising, preferably consisting of, repeating units R°, said repeating units R° being independently selected from:
(i) -CFXO-, wherein X is F or CF₃; and
(ii) -CFXCFXO-, wherein X, equal or different at each occurrence, is F or CF₃, with the proviso that at least one of X is -CF₃.

13. The lubricant composition according to any one of the claims 9 to 12, which is a lubricant oil or a lubricant grease.

14. A method of detecting a leak of a lubricant composition from an equipment comprising:
- providing an equipment containing a lubricant composition according to any one of claims 9 to 13;
- irradiating an external surface of the equipment with a UV light to excite the fluorescence of the dye of formula (I) present in the lubricant composition;
- determining the leak of the lubricant composition on the basis of a fluorescence response from the leaked lubricant composition on said external surface.

15. A method of detecting the presence or uniform application of a lubricant coating on a substrate comprising:
- coating a surface of a substrate with a lubricant composition according to any one of claims 9 to 13 to obtain a coated surface;
- irradiating the coated surface with a UV light to excite the fluorescence of the dye of formula (I) present in the lubricant composition;
- determining the presence or uniform application of the lubricant coating on the surface based on a fluorescence response from the coated surface.
